# EUROPEAN PATENT APPLICATION

(11) **EP 3 964 769 A1**
(43) Date of publication of application: **09.03.2022**
(21) Application number: 20194104.4
(22) Date of filing: 02.09.2020
(51) Int. Cl.: F25B 15/04

(54) **AQUA-AMMONIA ABSORPTION REFRIGERATION PROCESS AND METHOD OF REVAMPING**

(71) Applicant: CASALE SA, 6900 Lugano (CH)
(72) Inventor: PANZA, Sergio, 22100 Como (IT); CARLUCCI MAZZAMUTO, Marco, 22069 Rovellasca (CO) (IT)
(74) Representative: M. Zardi & Co S.A.

(57) **Abstract**

An aqua/ammonia absorption refrigeration process wherein: liquid ammonia is evaporated to produce ammonia vapours a refrigeration effect; ammonia vapours are absorbed in a lean aqueous solution of ammonia, obtaining a rich solution; gaseous ammonia is desorbed at high pressure from the rich solution to obtain gaseous ammonia and to regenerate a lean solution; the gaseous ammonia is condensed and expanded to low pressure for further use in the evaporator, wherein the absorption step comprises a washing process of the ammonia vapours with the lean solution performed in a washing column, wherein the washing column may operate as pre-absorption column in cooperation with water-cooled absorbers.

## Description

### Field of the invention

The invention relates to an aqua/ammonia absorption refrigeration system and a method for revamping the same.

### Prior art

An aqua/ammonia absorption refrigeration system essentially comprises:
an ammonia evaporator wherein a substantially pure liquid ammonia is evaporated;
an absorber wherein ammonia vapours from the evaporator are absorbed by a lean solution of ammonia and water (aqua/ammonia solution), producing a rich solution and releasing some heat to a cooling medium;
a desorber wherein gaseous ammonia is extracted from said rich solution and the above mentioned lean solution is separated for further use in the absorber;
a condenser wherein the gaseous ammonia withdrawn from the desorber is condensed to provide the liquid ammonia which is again directed to the evaporator.

The evaporation of ammonia in the evaporator produces the desired refrigeration, e.g. by removing heat from another stream.

The driving force of the process is the heat furnished to the desorber for separation of the refrigerant vapours from the rich solution. Compared to a conventional vapour compression refrigeration system (VCRS), an absorption refrigeration system uses low-temperature heat instead of electric power as source of energy to produce a refrigeration effect.

The above system is also known as AARP (aqua ammonia refrigeration plant).

The evaporator and the absorber are operated at a first pressure; the desorber and the air cooler are operated at a second pressure, which is higher than the first pressure. Generally the first pressure is comprised between vacuum and 5 bar.

The terms of lean solution and rich solution refers to the content of ammonia in the aqueous solution, i.e. the lean solution contains less ammonia than the rich solution.

AAR systems are used, among others, for the refrigeration of a process gas in ammonia plants. Refrigeration of this process gas transfers heat to the ammonia evaporator. For example the ammonia evaporator of the AAR system can be embodied as an indirect heat exchanger wherein the process gas to be refrigerated traverses one side of the exchanger and the evaporation of ammonia takes place in the other side. The two sides of the heat exchanger may be for example the shell side and tube side in a shell-and-tube equipment.

More in detail an ammonia plant essentially comprises a front-end section for the production of a make-up synthesis gas comprising H₂ and N₂ from a hydrocarbon feedstock, a compression section for elevating the pressure of the make-up gas to the synthesis pressure and a synthesis loop for the catalytic conversion of the make-up gas into a product gas predominantly made of ammonia. AAR systems are typically used for cooling the product gas downstream of a water cooler or a gas-gas exchanger, in order to condense and separate the ammonia from said product gas.

The present invention addresses in particular the adsorption step and the related equipment. In the prior art the adsorption section typically includes a plurality of water-cooled shell-and-tube absorbers. The tubes are traversed by cooling water and the shell side around the tubes receives the gaseous ammonia and the lean solution. In the shell side the gaseous ammonia absorbs in the solution, which releases heat. This heat is continuously removed by the cooling water in the tubes. The absorbers may operate in series, which means the cooling water and ammonia solution leaving a first absorber are fed to a second absorber and so on.

This embodiment has some drawbacks because it depends on fresh cooling water. First, the required amount of cooling water may not be available. Particularly a revamping aimed to increase the capacity may be limited by the available amount of cooling water for the absorbers, i.e. the absorbers may represent a bottleneck preventing from increasing the capacity of the overall AAR system. Second, the temperature of the available cooling water may depend on environmental factors. In the hot season the cooling water may be available at a higher temperature compared to design conditions leading to a lack of refrigeration power and reduced capacity. Still another drawback is that conventional absorbers introduce a significant pressure drop in the circuit of the solution, which affects the performance of the system.

Referring in particular to the ammonia plants there is a constant demand for increasing their capacity. Here the term capacity denotes the ammonia that is or can be produced. An increase in capacity of an ammonia plant would normally require to increase also the refrigeration power of the associated AAR system. Therefore the revamping of an ammonia plant using AAR for refrigeration would normally require revamping the AAR system to adapt its refrigeration power to the new capacity.

Techniques for revamping AAR systems are disclosed for example in EP 3 228 955 and EP 3 627 071.

### Summary of the invention

The aim of the invention is to solve the above drawbacks of the prior art of AAR systems. Particularly, the invention aims to reduce the need of cooling water for refrigeration of the absorption section. The invention also aims to remove the bottleneck represented by the conventional water-cooled absorbers in the context of a revamping for increasing the capacity.

The above aims are reached with an aqua/ammonia absorption refrigeration process according to claim 1. In the present invention the absorption step includes a step of contacting the lean ammonia solution and the gaseous ammonia in a washing column. In the column, the gaseous ammonia is washed with the solution and ammonia is absorbed in the solution during the washing process. A rich ammonia solution can be withdrawn from the washing column; a portion of said rich ammonia solution is cooled and reintroduced in the column to remove the absorption heat.

Said washing column may replace the conventional water-cooled absorbers. In some embodiments the rich solution effluent from the washing column may be subject to a further absorption step in water-cooled absorbers together with ammonia-containing vapours withdrawn from the column.

The invention also relates to an aqua/ammonia absorption refrigeration system according to the claims.

The invention further relates to a method for revamping an aqua/ammonia refrigeration system using conventional water-cooled absorbers.

The revamping method may include:
installation of a washing column;
a feed line of the lean solution, originally directed to the water-cooled absorbers, is modified so that at least a portion of the lean solution is sent to the newly installed washing column;
the feed line of the gaseous ammonia is modified so that the gaseous ammonia is directed to the washing column;
installation of a recirculation line including a cooler, said recirculation line being arranged for taking a portion of rich solution from the column and reintroducing said portion in the column after cooling.

In the newly installed washing column the lean solution and the gaseous ammonia are contacted so that ammonia is absorbed in the solution.

The water-cooled absorbers may continue to operate after revamping, together with the new washing column. In such a case the washing column can be regarded as a pre-absorption column and the rich solution taken from the column bottom is subject to further absorption, to obtain the rich solution for the regenerator of the AAR system. In some embodiments however the washing column may fully replace the conventional absorbers which means the effluent of the column can be sent directly to the regenerator.

The invention has the following advantages: reduction or even elimination of the need of cooling water for the absorption process; the absorption section is de-bottlenecked paving the way for a capacity increase; the washing column has a very low pressure drop compared to water-cooled shell-and-tube absorbers; the overall coefficient of performance (COP) of the AAR system can be increased.

### Preferred embodiments

The lean ammonia solution is fed preferably the top of the washing column and the gaseous ammonia is preferably fed to the bottom of the column. Accordingly the column has a descending flow of solution which is contacted with an ascending flow of gaseous ammonia. The column may include internals arranged to promote the contact between the liquid solution and the gaseous ammonia.

It shall be understood that the term gaseous ammonia may denote more generally a gaseous stream containing gaseous ammonia.

In the washing column, the absorption heat is removed by a portion of rich ammonia solution which is cooled and reintroduced in the column. Preferably said portion of rich ammonia solution is taken from the bottom of the column and, after cooling, is reintroduced at the top of the column. More preferably said portion of rich ammonia is cooled in any of: an air cooler, an evaporative condenser, a water cooler. A suitable said recirculation line can be arranged to take said portion of rich solution from bottom of the column and to reintroduce the solution after cooling at the top of the column.

It can be understood that refrigeration of the column (i.e. removal of the heat released by the absorption of ammonia in the lean solution) is performed by said recirculation line and more precisely by its cooler.

The portion of the rich solution which is recirculated and cooled is preferably at least 30% of the rich solution produced in the column.

An embodiment of the revamping method includes: arranging a line to feed a first portion of the lean solution to the newly installed washing column; arranging a line to feed a remaining second portion of said solution to the existing one or more absorbers. Preferably at least 50% of the lean solution is sent to the washing column.

According to this embodiment, part of the rich solution is obtained in the new washing column and part is obtained in the existing water-cooled absorbers.

The method may further include arranging a line to feed a portion of the non-recirculated rich solution, withdrawn from the washing column, to said absorbers. This portion may be fed to the absorbers together with said second portion of lean solution.

Generally the existing absorbers are shell-and-tube equipment where absorption occurs in the shell side and cooling water flows in the tube side. The shell side is a space around the tubes confined by a vessel; the tube side denotes the inside of tubes of a tube bundle. Said second portion of the lean solution and portion of rich solution are fed to the shell side of the absorbers.

Optionally also a gaseous stream withdrawn from top of the washing column can be fed to the shell side of the absorbers. This gaseous stream may be fed to the absorbers using the line originally used to introduce the gaseous ammonia in the absorbers.

The rich solution collected from the washing column may be divided into three streams. A first stream is recirculated in the line including the cooler; a second stream is sent to the shell side of the water-cooled absorbers; a third stream is exported as rich solution and sent to the regenerator together with the rich solution obtained in the absorber.

In another embodiment the entire amount of rich solution for the regenerator is obtained in the new washing column. In this event, the existing water-cooled absorbers are no longer used after revamping and can be discontinued.

The advantages of the invention will emerge even more clearly with the aid of the detailed description below relating to a preferred embodiment.

### Description of the figures

Fig. 1 is a simplified scheme of an aqua-ammonia absorption refrigeration system according to the prior art;
Fig. 2 illustrates a scheme of an absorption section including a washing column according to an embodiment of the invention.
Fig. 3 shows a scheme of a conventional absorption section based on water-cooled absorbers.
Fig. 4 shows the absorption section of Fig. 3 after a revamping according to an embodiment of the invention.

### General description of the AAR system

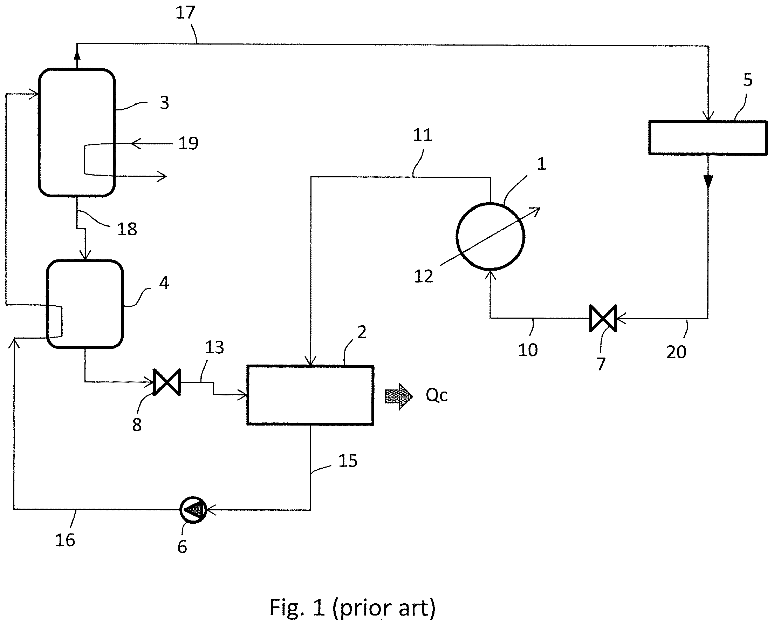

Fig. 1 illustrates an AAR system according to the prior art. A brief description of the system is deemed useful for the understanding of the invention.

The AAR system includes the following main items: ammonia evaporator 1, absorber section 2, desorber 3, heat exchanger 4, condenser 5, ammonia solution pump 6, first letdown valve 7, second letdown valve 8.

The evaporator 1 and the absorber 2 operate at a first pressure and the desorber 3 and condenser 5 operate at a second pressure which is greater than the first.

The pump 6 and the valves 7, 8 define a high-pressure side and a low-pressure side of the process. In common embodiments, the low pressure is in the range 100 kPa to 450 kPa and the high pressure is in the range 900 kPa to 1400 kPa.

A liquid ammonia in line 10 evaporates in the ammonia evaporator 1. Evaporation of the liquid ammonia produces gaseous ammonia (ammonia vapours) 11 and cools a process stream 12 producing a refrigeration effect.

Said process stream 12 for example is a process stream of synthesis of ammonia. Hence the evaporator 1 acts as chiller of the process stream 12. The process stream 12 may e.g. contain ammonia synthesized in the ammonia synthesis process. In such a case it can be said the evaporator 1 is an ammonia chiller.

The gaseous ammonia 11 is absorbed in a lean aqueous solution of ammonia 13 in the absorber section 2. The mixture of gaseous ammonia and lean solution releases heat Qc which is removed from the absorber section 2.

A rich ammonia solution 15 is withdrawn from the absorber section 2. This rich solution 15 is pumped by the ammonia solution pump 6 to the heat exchanger 4 and then to the desorber 3.

The high-pressure rich solution 16 delivered by the pump 6 is preheated in the heat exchanger 4 and reaches the desorber 3.

Said desorber 3 performs a desorption process obtaining a gaseous ammonia 17 and a lean aqueous solution of ammonia 18. The desorption process requires a heat input given by a heating medium 19, e.g. low-pressure steam.

The desorber 3 can be a fractionation column in a preferred embodiment, wherein the gaseous ammonia emerges from top of the column and the regenerated lean solution is recovered from bottom.

The lean aqueous solution of ammonia 18 preheats the incoming rich solution in the heat exchanger 4 and, after de-pressurization in the letdown valve 8, forms the lean solution stream 13 directed to the absorber 2.

The gaseous ammonia 17 taken from the desorber 3 is condensed in the condenser 5, which is for example an air condenser. The so obtained high-pressure liquid ammonia 20 is de-pressurized through the letdown valve 7 and forms the liquid ammonia stream 10 directed to the evaporator 1.

There can be a cooling step (not shown) of the gaseous ammonia 17 before condensation in the condenser 5. Also, there can be a heat recovery between the liquid ammonia 10 and the gaseous ammonia 11.

The main energy input from the process is the heating medium 19, that provides heat for regeneration of the lean solution. On the other hand, the heat Qc must be removed from the absorber section 2.

### Absorber section according to a preferred embodiment

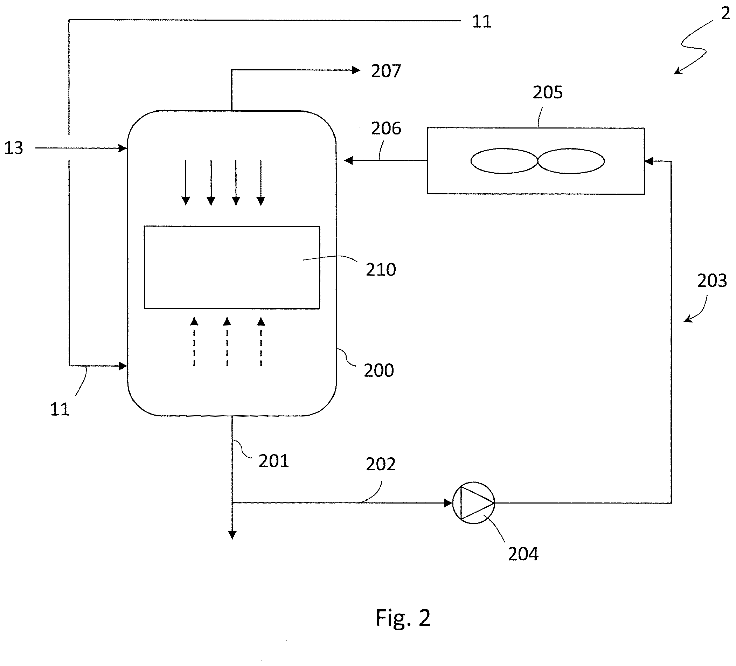

Fig. 2 illustrates the absorber section 2 according to a preferred embodiment of the invention.

The absorber section 2 includes a washing column 200. The lean ammonia solution 13 is sent to the top of the column 200 and ammonia vapours 11 are sent to the bottom of the column 200.

Accordingly, in the column, a descending flow of liquid solution contacts an ascending flow of ammonia vapours as denoted by arrows in Fig. 2. The contact may be facilitated by a packing 210 or other suitable internals of the column.

This washing process results in the absorption of ammonia in the solution and formation of a rich solution 201 which is collected at the bottom of the column.

A portion 202 of said solution is recirculated via a recirculation line 203 including a circulation pump 204 and a solution cooler 205. The so obtained cooled solution 206 is reintroduced in the column 200, preferably at the top of the column. Preferably the cooled solution 206 is reintroduced at the same or substantially the same level in the column 200 as the lean solution 13.

As an alternative embodiment the lean solution can be introduced upstream solution cooler 205, or directly in the column 200 to an upper level than the cooled rich solution 206.

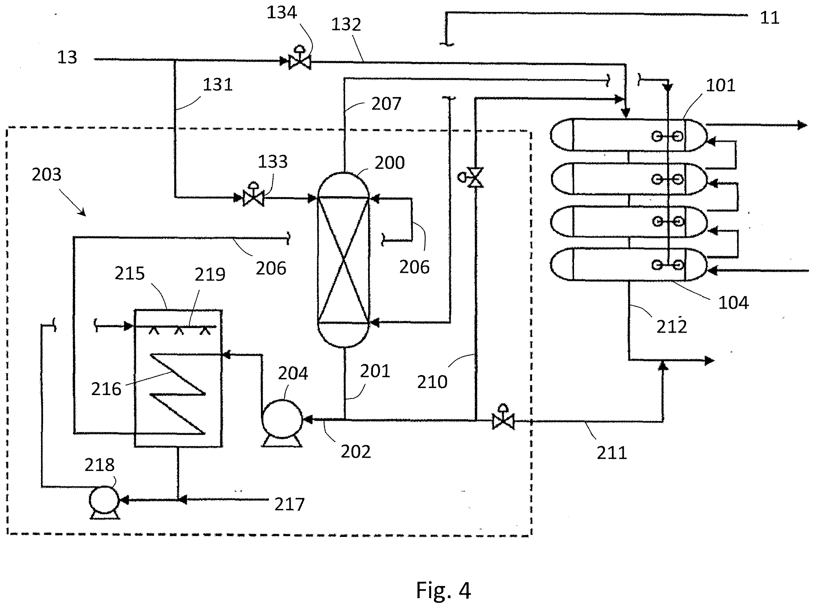

The solution cooler 205 removes the heat of absorption Qc which is released in the column and transferred to the rich solution. The solution cooler 205 may transfer the heat removed from the solution to a suitable cooling medium or to ambient air. For example Fig. 4 illustrates an embodiment wherein the solution cooler is an evaporative cooler.

From top of the column, a stream 207 containing inerts and possibly ammonia vapours is also withdrawn.

### Revamping of a conventional water-cooled absorber section

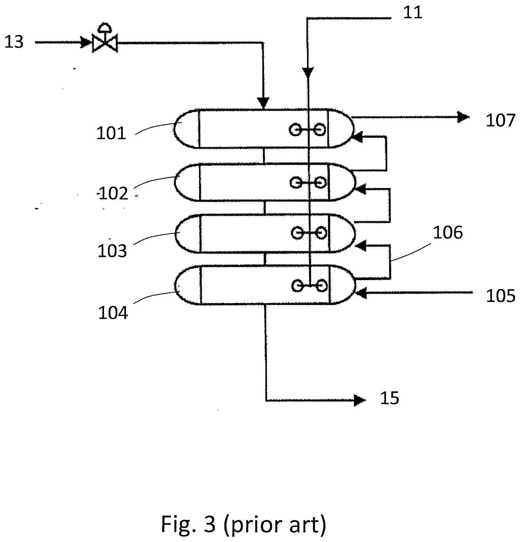

An example of revamping a conventional absorber section is now elucidated with reference to Figs. 3 and 4.

The Fig. 3 illustrates an example of an absorber section including four water-cooled shell-and-tube absorbers 101 to 104. Each absorber has a shell side wherein the lean solution contacts the ammonia vapours around a tube bundle traversed by cooling water to remove absorption heat.

A fresh cooling water is fed to the absorber 104 via line 105. After a passage in the tubes of said absorber 104, the cooling water leaving the absorber 104 enters the next absorber 103 via line 106 and so on until the water reaches the return line 107.

The lean solution 13 is fed to the shell side of the absorber 101; the partially enriched solution from the absorber 101 is fed to the next absorber 102 and so on until the rich solution 15 is taken from the last absorber 104.

According to the prior-art setup of Fig. 3 the absorption heat Qc is removed by the cooling water supply of line 105.

Fig. 4 shows the same absorber section having been revamped in accordance with an embodiment of the invention wherein the revamping includes basically the addition of a washing column 200 with a recirculation line 203 including a pump 204 and an evaporative cooler 215.

The newly installed washing column 200 of Fig. 4 can be similar to the column described above with reference to Fig. 2.

The evaporative cooler 215 removes heat from the solution 202 pumped to said evaporative cooler 215 via the pump 204. In detail, the solution 202 is pumped through a coil 216; cooling water is collected from the bottom of the evaporative cooler 215 and possibly added with make-up water 217; the cooling water is then fed with a pump 218 to sprayer 219 located above the coil 216 and sprayed over the coil.

The dotted frame of Fig. 4 indicates the module which is added during the revamping procedure.

The revamping procedure includes that lean solution 13 coming from the regenerator is now split between the newly installed washing column 200 and the existing water-cooled absorbers 101 to 104. More in detail a line 131 feeds a first portion of lean solution to the top of the washing column 200 and another line 132 feeds a remaining portion of the lean solution to the assembly of the water-cooled absorbers. The partition of the lean solution between the column and the absorbers can be controlled via valve 133 of the line 131 and valve 134 of the line 132.

The line carrying the ammonia vapours 11 is fully redirected to the bottom of the washing column 200 so that the washing column 200 operates a counter-current washing process as described above with reference to Fig. 2. The washing column 200 is refrigerated by the cooled recirculated solution 206.

In the embodiment of Fig. 4 the newly installed washing column 200 cooperate with the existing water-cooled absorbers 101 to 104. A second portion of rich solution from the column is sent with line 210 to the shell side of the water-cooled absorbers together with the lean solution of line 132 and optionally with ammonia-containing vapours withdrawn from the washing column via line 207.

The lean solution line 132 may join with the rich solution line 210, i.e. the lean solution and the rich solution may be mixed and fed together to the shell side of the water-cooled absorbers 101 to 104.

The vapour line 207 may be connected to the inputs of the water-cooled absorbers originally connected to the ammonia vapour line 11, which is now redirected to the bottom of the column 200. Accordingly, the remaining ammonia vapours which are not condensed in the column 200 can be fully condensed in the water-cooled absorbers 101 to 104.

A third portion of rich solution obtained from the column in line 211 joins the rich solution 212 obtained from the water-cooled absorbers and forms the stream of condensed ammonia-rich solution sent to the regenerator of the AAR system, e.g. the stream 15 of Fig. 1.

The more absorbent solution is recirculated through the circulation pump 204, the less are the ammonia vapours that can slip the column 200. Consequently the duty of the absorbers 101 to 104 and consumption of cooling water can be reduced and practically the water consumption can be made as low as desired.

It can also be noted that only a portion of the rich solution passes through the water-cooled absorbers via line 210. This portion may be a minor portion of the rich solution globally produced in the section 2. Accordingly the pressure drop suffered by the circuit of the ammonia solution is reduced.

According to a different embodiment the line 131 may connect to the recirculation circuit 203, e.g. to line 202 at the suction or discharge side of the pump 204. Accordingly, the lean solution may be introduced in the washing column 200 together with the recirculated rich solution.

In another embodiment the evaporative cooler 215 of Fig. 4 can be replaced with an air cooler. In another embodiment a water cooler may be used.

In another interesting embodiment the washing column 200 may fully replace the water-cooled absorbers, i.e. the absorption duty may be entirely performed by the column. In such a case the revamping may include the step of discontinuing operation of the water-cooled absorbers.

## Claims

1. An aqua/ammonia absorption refrigeration process comprising the steps of:
an evaporation step comprising the evaporation of liquid ammonia (10) in an ammonia evaporator (1) and producing gaseous ammonia (11);
an absorption step comprising absorption of said gaseous ammonia in a lean aqueous solution of ammonia (13) producing a rich aqueous solution of ammonia (16);
a desorption step comprising the extraction of gaseous ammonia (17) from said rich solution obtaining gaseous ammonia and a lean solution (18);
condensation of gaseous ammonia (17) obtained in the desorption step to provide liquid ammonia for further use in the evaporator;
wherein the evaporation step and absorption step are performed at a first pressure and the desorption step and condensation are performed at a second pressure which is higher than said first pressure;
**characterized in that** the absorption step comprises:
a washing process wherein the gaseous ammonia is washed with the solution in a washing column (200) and ammonia is absorbed in the solution during the washing process obtaining a rich ammonia solution (201);
a portion (202) of said rich ammonia solution withdrawn from the column (200) is cooled and recirculated to the column to remove absorption heat.

2. A process according to claim 1 wherein lean ammonia solution is fed to the top of the column and gaseous ammonia is fed to the bottom of the column so that in the column a descending flow of liquid solution is contacted with an ascending flow of gaseous ammonia.

3. A process according to claim 2 wherein said recirculated portion (202) of rich ammonia solution is taken from the bottom of the column and, after cooling, is reintroduced at the top of the column.

4. A process according to any of the previous claims wherein said recirculated portion of rich ammonia is cooled in a solution cooler including any of: an air cooler, an evaporative condenser, a water cooler.

5. A process according to any of the previous claims wherein the process is used for the refrigeration of a process stream of an ammonia plant.

6. An aqua/ammonia absorption refrigeration system comprising an absorption section (2) arranged for absorption of gaseous ammonia into a lean aqueous solution of ammonia, to produce a rich aqueous solution of ammonia, **characterized in that** said absorption section comprises:
a washing column (200) fed with said gaseous ammonia and said lean solution, inside which the gaseous ammonia and lean solution are contacted and an ammonia rich solution is produced,
a recirculation line (203) arranged for taking a portion of rich solution from the column and reintroducing said portion in the column, said line including a solution cooler (205) so that said portion of solution is reintroduced in the column after cooling.

7. A refrigeration system according to claim 6 including a line arranged to feed the lean solution at top of the column and a line arranged to feed the gaseous ammonia at bottom of the column.

8. A refrigeration system according to claim 6 or 7 wherein said recirculation line is arranged to take the rich solution from bottom of the column and to reintroduce a portion of said rich solution after cooling at the top of the column.

9. A refrigeration system according to any of claims 6 to 8 wherein the solution cooler (205) of the recirculation line is any of: an air cooler, an evaporative condenser (215), a water cooler.

10. A refrigeration system according to any of claims 6 to 9 wherein the washing column (200) includes internals (210) arranged to promote the contact between the liquid solution and the gaseous ammonia.

11. A method for revamping an aqua/ammonia refrigeration system, wherein:
the aqua/ammonia refrigeration system comprises an ammonia evaporator (1), an absorption section (2), a desorber (3) and a condenser (5);
the absorption section of the system to be revamped is connected to a feed line (13) of a lean aqueous solution of ammonia and to a feed line (11) of gaseous ammonia and is arranged to provide absorption of gaseous ammonia in the lean solution obtaining a rich solution of ammonia;
the absorption section of the system to be revamped includes one or more cooled absorbers (101-104) wherein each of the cooled absorbers is an indirect heat exchanger with a first side where the lean ammonia solution and the gaseous ammonia are brought into contact to each other and a second side traversed by a cooling medium such as water;
the method of revamping including the following step:
installation of a washing column (200);
the feed line of the lean solution is modified by installing a line (131) arranged to feed at least a portion of the lean solution to said washing column;
the feed line of the gaseous ammonia is redirected to feed the gaseous ammonia to the washing column;
wherein in the newly installed washing column the lean solution and the gaseous ammonia are contacted so that ammonia is absorbed in the solution during the washing process;
installation of a recirculation line (203) including a solution cooler (205), said recirculation line being arranged for taking a portion of rich solution from the column and reintroducing said portion in the column after cooling.

12. A method according to claim 11 including: arranging a first line (131) to feed a first portion of the lean solution to the newly installed washing column; arranging a second line (132) to feed a remaining second portion of said solution to the existing one or more absorbers (101-104).

13. A method according to claim 12 including the provision of a line (210) to feed at least a portion of the non-recirculated rich solution withdrawn from the washing column to said absorbers (101-104) together with said second portion (132) of lean solution.

14. A method according to claim 13, further including the provision of a line (207) to feed vapours from top of the washing column to the existing one or more absorbers.

15. A method according to claim 11 wherein the lean solution feed line is modified so that the lean solution originally directed to the one or more cooled absorbers is entirely sent to the newly installed washing column.

16. A method according to any of claims 11 to 15 wherein the solution cooler installed in the recirculation line of the column is any of an air cooler, an evaporative condenser, a water cooler.

17. A method according to any of claims 11 to 16 wherein the aqua/ammonia refrigeration system is part of a plant for the synthesis of ammonia and is used for the refrigeration of at least one process stream of the ammonia synthesis process.
